# EUROPÄISCHE PATENTSCHRIFT

(11) **EP 1 521 952 B1**
(45) Veröffentlichungstag und Bekanntmachung des Hinweises auf die Patenterteilung: **04.08.2010**
(21) Anmeldenummer: 03708035.5
(22) Anmeldetag: 19.02.2003
(51) Int. Cl.: G01L 9/00

(54) **VORRICHTUNG ZUR DRUCKMESSUNG**
PRESSURE MEASURING DEVICE
DISPOSITIF DE MESURE DE PRESSION

(30) Priorität: 25.05.2002 DE 10223357
(43) Veröffentlichungstag der Anmeldung: 13.04.2005
(73) Patentinhaber: ROBERT BOSCH GMBH, 70442 Stuttgart (DE)
(72) Erfinder: FESSELE, Thomas, 72202 Nagold (DE); HOCHENBERGER, Hans-Martin, 71701 Schwieberdingen (DE); KUHNT, Winfried, 70193 Stuttgart (DE)
(86) Internationale Anmeldenummer: PCT/DE2003/000501
(87) Internationale Veröffentlichungsnummer: WO 2003/100371

(56) Entgegenhaltungen:
- DE-A- 19 731 420
- DE-A- 19 961 776
- US-A- 5 747 694

## Beschreibung

### Stand der Technik

Die Erfindung betrifft eine Vorrichtung zur Druckmessung mit den Merkmalen des Oberbegriffs des unabhängigen Anspruchs 1.

Eine derartige Vorrichtung zur Druckmessung ist beispielsweise aus der DE 197 31 420 A1 und der DE19961776 A1 bekannt. Die dort gezeigte Vorrichtung wird zur Messung des Drucks im Saugrohr einer Brennkraftmaschine eingesetzt und weist einen als Hybridplatte ausgebildeten Träger auf, der in einem Gehäuse angeordnet ist. Ein als Druckraum vorgesehener erster Gehäuseraum, in dem sich ein auf dem Träger angeordnetes Sensorelement befindet, ist über einen Druckanschluss mit dem Saugrohr verbindbar und gegenüber der Umgebung und einem zweiten Gehäuseraum mittels eines Klebstoffs abgedichtet. In dem als Bondraum vorgesehenem zweiten Gehäuseraum sind Bonddrähte angeordnet, welche den Träger mit einem Steckerteil elektrisch verbinden.

### Vorteile der Erfindung

Die erfindungsgemäße Vorrichtung zur Druckmessung mit den kennzeichnenden Merkmalen des Anspruchs 1 ist vorteilhaft in neuen Anwendungsgebieten einsetzbar, wie beispielsweise der Messung des Abgasdrucks, was insbesondere für die Einführung eines Partikelfilters bei Dieselmotoren von großer Bedeutung ist. Vorteilhaft steht nun das bisher nur für Absolutdrucksensoren eingesetzte Sensorkonzept mit der Entkoppelung von mechanischen Spannungen über Dichtklebungen und die preisgünstig herstellbare und einfache zweiteilige Gehäusekonstruktion auch für Differenzdruckmessungen zur Verfügung. Besonders vorteilhaft ist, dass auf bestehenden Fertigungseinrichtungen gefertigt werden kann und nur wenige Klebeschritte erforderlich sind. Die erfindungsgemäße Vorrichtung weist zusätzlich zu dem ersten Gehäuseraum und dem zweiten Gehäuseraum einen dritten Gehäuseraum auf, der gegenüber dem ersten Gehäuseraum und dem zweiten Gehäuseraum abgedichtet ist und mit einem zweiten Druckkanal eines zweiten Druckanschlusses verbunden ist. Über eine Aussparung im Träger unterhalb des Sensorelementes kann das Sensorelement so mit dem im dritten Gehäuseraum herrschenden Druck beaufschlagt werden und die Vorrichtung zur Differenzdruckmessung eingesetzt werden.

Vorteilhafte Ausführungsbeispiele und Weiterentwicklungen der Erfindung werden durch die in den abhängigen Ansprüchen angegebenen Merkmale ermöglicht.

Ein besonders einfach herstellbares Ausführungsbeispiel sieht vor, dass der dritte Gehäuseraum durch eine von dem Sensorelement abgewandte Seite des Trägers und die Innenwand einer an einer dem Träger zugewandten Innenseite des ersten Gehäuseteils ausgebildeten und mit dem zweiten Druckkanal in Verbindung stehenden oder diesen bildenden Ausnehmung begrenzt werden.

Vorteilhaft können der erste Druckanschluss und der zweite Druckanschluss an dem ersten Gehäuseteil ausgebildet sein, so dass das zweite Gehäuseteil als einfaches Deckelteil ausgebildet sein kann.

Zwischen der dem Träger zugewandten Innenseite des ersten Gehäuseteils und der von dem Sensorelement abgewandten Seite des Trägers kann vorteilhaft eine erste Dichtung angeordnet sein, welche den dritten Gehäuseraum von dem ersten Gehäuseraum abdichtet. Im Auflagebereich vom ersten Gehäuseteil und zweiten Gehäuseteil ist eine zweite Dichtung angeordnet, welche den ersten Gehäuseraum von dem zweiten Gehäuseraum abdichtet, wobei die zweite Dichtung einen umlaufenden Dichtungsabschnitt im Auflagebereich vom ersten Gehäuseteil und zweiten Gehäuseteil und einen den umlaufenden Dichtungsabschnitt brückenartig übergreifenden inneren Dichtungsabschnitt aufweist, welcher den Übergangsbereich zwischen dem Träger und einer an dem zweiten Gehäuseteil ausgebildeten, den ersten Gehäuseraum von dem zweiten Gehäuseraum trennenden Trennwand abdichtet. Vorteilhaft ist, dass durch die beiden Dichtungen gleich drei Gehäuseräume voneinander abgedichtet werden. Ein aufwendiger schichtartiger Aufbau des Gehäuses, bei dem der zweite Druckanschluss an dem zweiten Gehäuseteil angeordnet ist, wird vorteilhaft vermieden.

Die erste Dichtung und/oder die zweite Dichtung kann durch jeweils eine Dichtklebung und insbesondere durch jeweils eine Klebstoffraupe gebildet werden. Vorteilhaft ist die erste Dichtklebung und/oder die zweite Dichtklebung im wesentlichen in jeweils einer Ebene angeordnet, wodurch ein Zerfliesen des Klebstoffs unmittelbar nach dem Klebstoffauftrag während der beiden Klebeschritte vermieden wird.

Besonders vorteilhaft ist es weiterhin, EMV-Schutzkondensatoren, welche die elektromagnetische Verträglichkeit (ENIV) gewährleisten, zur Vermeidung von Kurzschlüssen innerhalb des zweiten Gehäuseraums auf dem Träger anzuordnen, da sich hier eine geringere Menge Abgaskondensat ansammelt, als in dem ersten Gehäuseraum. Dies ist besonders vorteilhaft, wenn die Vorrichtung zur Messung des Abgasdrucks über eine Anschlüssleitung mit dem Abgassystem verbunden ist und sich in dem ersten Gehäuseraum größere Mengen Abgaskondensats niederschlagen.

### Zeichnungen

Ausführungsbeispiele der Erfindung sind in den Zeichnungen dargestellt und werden in der nachfolgenden Beschreibung erläutert. Es zeigt
Fig. 1a einen Querschnitt durch ein erstes Ausführungsbeispiel der erfindungsgemäßen Vorrichtung,
Fig. 1b eine Draufsicht auf die Vorrichtung aus Fig. 1a,
Fig. 2 bis 7 verschiedene Schritte bei der Herstellung eines zweiten Ausführungsbeispiels der erfindungsgemäßen Vorrichtung und
Fig. 8 einen Querschnitt durch das zweite Ausführungsbeispiel der Erfindung.

### Beschreibung der Ausführungsbeispiele

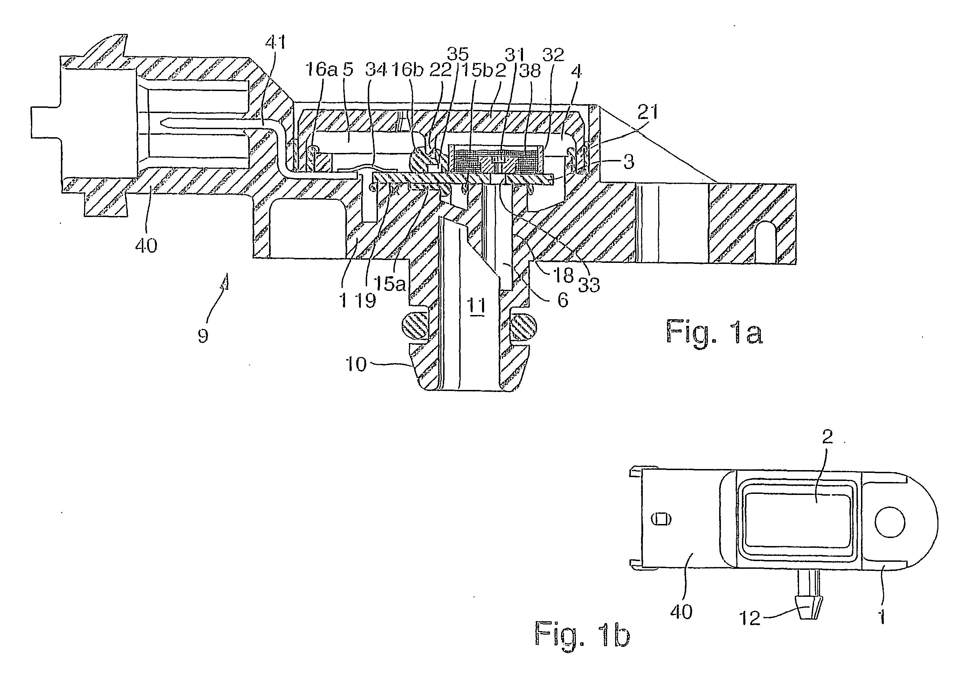

Fig. 1a zeigt einen Querschnitt durch ein erstes Ausführungsbeispiel einer erfindungsgemäßen Vorrichtung zur Druckmessung, welche als Differenzdrucksensor ausgebildet ist und ein zweiteiliges Gehäuse 9 mit einem ersten Gehäuseteil 1 und einem zweiten Gehäuseteil 2 aufweist, das ein auf das erste Gehäuseteil aufsetzbares Deckelteil bildet. An dem ersten Gehäuseteil 1 ist ein Stecker 40 ausgebildet, dessen Kontaktelemente 41 ins Gehäuseinnere geführt sind, wo eine keramische Hybridplatte 3 als Träger des eigentlichen Sensorelementes 31 angeordnet ist. Das Sensorelement 31 kann beispielsweise ein mit druckempfindlichen Elementen auf einer Sensormembran versehener Halbleiter-Drucksensor auf Siliziumbasis sein, der über einen Glassockel 38 in an sich bekannter Weise auf den Träger 3 aufgebracht ist. Bonddrähte kontaktieren das Sensorelement 31 mit Leiterbahnen des Trägers 3. Auf dem Träger können noch weitere elektrische/elektronische Bauelemente angeordnet sein. Um das Sensorelement 31 ist ein Rahmen 32 auf den Träger 3 aufgesetzt, der zum Schutz des Sensorelementes 31 vor aggressiven Substanzen beispielsweise mit einem Fluorsilikongel als Schutzgel gefüllt ist. Die mit den Leiterbahnen verbundenen elektrischen Anschlüsse 34 des Trägers sind über Bonddrähte mit den Kontaktelementen 41 des Steckers 40 kontaktiert.

Wie in Fig. 1b zu erkennen ist, ist an dem ersten Gehäuseteil 1 ein stutzenförmiger erster Druckanschluss 12 seitlich angebracht. Ein in Fig. 1a und 1b nicht dargestellter, in dem Druckanschluss 12 verlaufender Druckkanal öffnet sich in einen ersten Gehäuseraum 4, der zwischen dem ersten Gehäuseteil 1 und dem zweiten Gehäuseteil 2 angeordnet ist. Der in dem ersten Gehäuseraum 4 herrschende Druck wirkt über das Schutzgel auf die Membran des Sensorelementes 31 ein. Eine an dem zweiten Gehäuseteil 2 ausgebildete Trennwand 22 trennt einen zweiten Gehäuseraum 5 von dem ersten Gehäuseraum 4 ab. In dem zweiten Gehäuseraum 5 sind die elektrischen Anschlusselemente des Trägers 3 mit den Bonddrähten 34 angeordnet. Ein zweiter stutzenförmiger Druckanschluss 10 weist einen Druckkanal 11 auf, der mit einer Ausnehmung in Verbindung steht, welche in einer dem Träger 3 zugewandten Innenseite 19 des ersten Gehäuseteils ausgebildet ist. Durch die der Innenseite 19 zugewandte Unterseite des Trägers 3 und die Innenwandung 18 dieser Ausnehmung wird ein dritter Gehäuseraum 6 gebildet. Durch eine in dem Träger 3 vorgesehene Öffnung 33 und eine zylindrische Öffnung in dem Glassockel 38 wird die dem Träger 3 zugewandte Unterseite der druckempfindlichen Membran des Sensorelementes 31 mit dem im dritten Gehäuseraum 6 anstehenden Druck beaufschlagt, so dass von dem: Sensorelement 31 der Differenzdruck zwischen dem ersten Gehäuseraum 4 und dem dritten Gehäuseraum 6 erfasst wird. Die drei Gehäuseräume sind durch Dichtklebungen 15 und 16 voneinander abgedichtet. Die Herstellung dieser Dichtklebungen wird nachfolgend an einem weiteren Ausführungsbeispiel der erfindungsgemäßen Vorrichtung dargestellt.

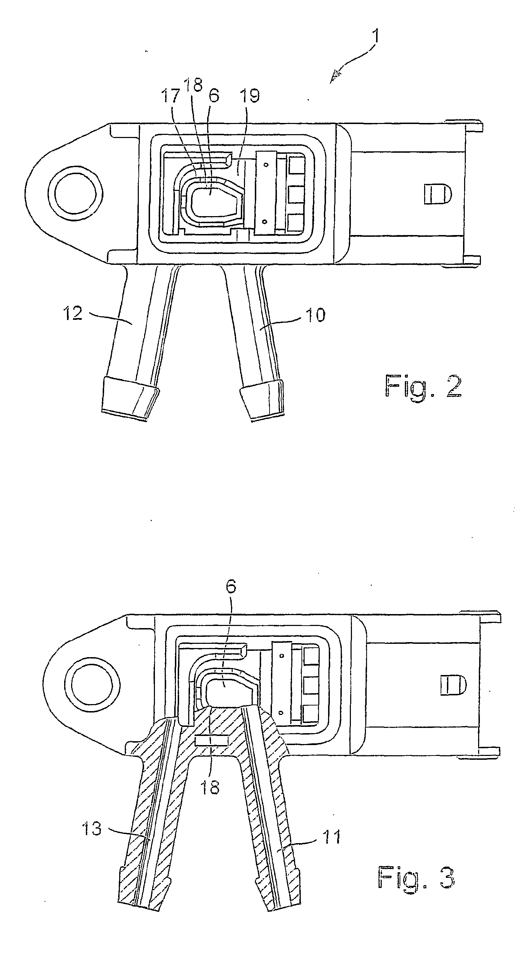

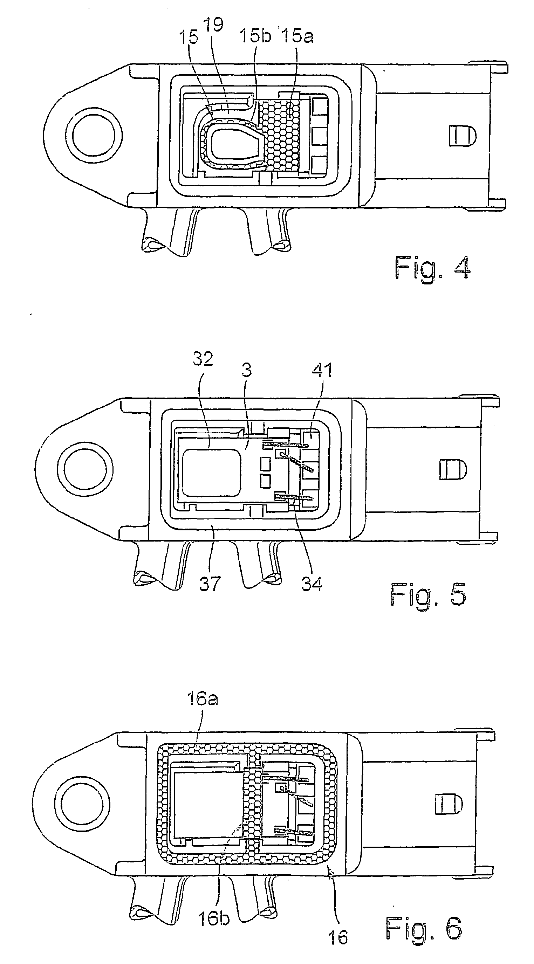

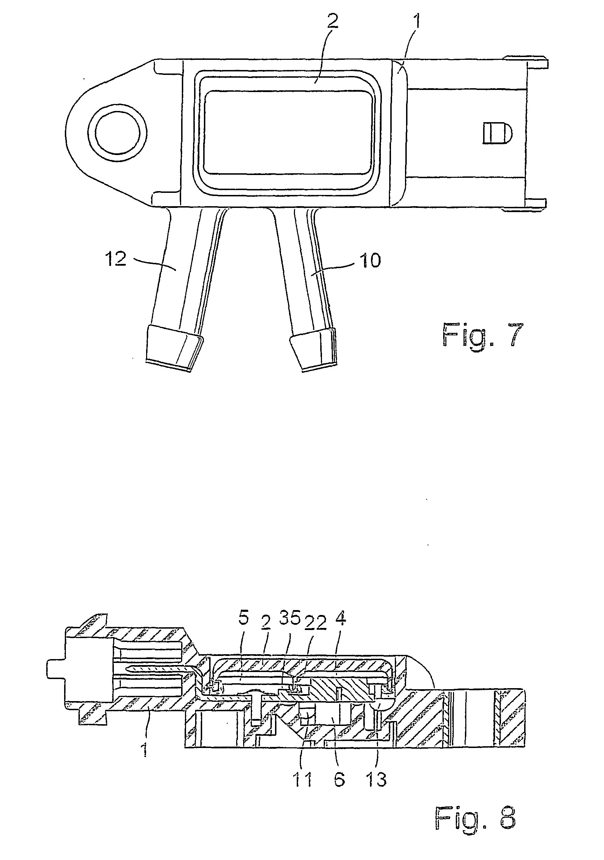

Fig. 2 zeigt eine Draufsicht auf das erste Gehäuseteil 1 eines weiteren Ausführungsbeispiels bei abgenommenem Deckelteil 2 und ohne den Träger 3. In Fig. 2 ist die Innenseite 19 des ersten Gehäuseteils 1 zu erkennen, in der eine Ausnehmung 18 angeordnet ist. Um den Rand der Ausnehmung 18 ist eine umlaufende Nut 17 angeordnet. In diesem Ausführungsbeispiel stehen die beiden Anschlussstutzen 10,12 von einer gemeinsamen Seite des ersten Gehäuseteils 1 ab, während sie in dem Ausführungsbeispiel von Fig. 1a rechtwinklig zueinander angeordnet sind. In der teilgeschnittenen Darstellung von Fig. 3 ist zu erkennen, dass der erste Druckkanal 13 des ersten Druckanschlusses 12 seitlich ins Innere des Gehäuses geführt ist und der zweite Druckkanal 11 des zweiten Druckanschlusses 10 in die Ausnehmung 18 einmündet. Fig. 4 zeigt wie im ersten Herstellungsschritt als erste Dichtung eine Klebstoffraupe 15 auf die Innenseite 19 des ersten Gehäuseteils 1 aufgetragen wird. Dabei umgibt ein in die Nut 17 eingebrachter erster Abschnitt 15b der Klebstoffraupe umlaufend die Ausnehmung 18 und ein weiterer Abschnitt 15a wird direkt daneben auf die Innenseite 19 aufgebracht. Anschließend wird der Träger 3 mit dem Sensorelement auf den Klebstoff aufgesetzt und die Bonddrahtverbindung von den Anschlüssen des Trägers 3 zu den Kontaktelementen 41 hergestellt. Durch den Träger 3 wird die Ausnehmung 18 abgedeckt. Der dritte Gehäuseraum 6 ist nun durch den Abschnitt 15b der Klebstoffraupe 15 gegenüber dem restlichen Gehäuseinnenraum abgedichtet. Wie in Fig. 6 gezeigt, wird nun die zweite Dichtung 16 mittels eines weiteren Kleberauftrags hergestellt, welcher in die Nut 37 eingebracht wird und teilweise auch auf die mit dem Sensorelement 31 versehene Seite des Trägers 3 aufgetragen wird. Die zweite Dichtung 16 weist einen umlaufenden Dichtungsabschnitt 16a und einen teilweise auf den Träger 3 aufgebrachten und den umlaufenden Dichtungsabschnitt 16a brückenartig übergreifenden inneren Dichtungsabschnitt 16b auf. Schließlich wird, wie in Fig. 7 dargestellt, das zweite Gehäuseteil 2 auf das erste Gehäuseteil 1 aufgesetzt. Dabei wird gleichzeitig der erste Gehäuseraum 4 und der zweite Gehäuseraum 5 gebildet. Eine an dem zweiten Gehäuseteil 2 angeformte Trennwand 22 greift dabei in den inneren Dichtungsabschnitt 16b ein, so dass der erste Gehäuseraum 4 von dem zweiten Gehäuseraum 5 abgedichtet wird, wie am besten in der Querschnittsdarstellung der Fig. 8 zu erkennen ist. Der umlaufende Dichtungsabschnitt 16a dichtet beim Aufsetzten des zweiten Gehäuseteils 2 den Auflagebereich von erstem und zweitem Gehäuseteil ab. Besonders vorteilhaft ist, dass die erste Dichtklebung 15 und die zweite Dichtklebung 16 im wesentlichen in je einer Ebene angeordnet sind, wodurch ein Zerfließen des Klebstoffs nach dem Auftragen verhindert wird.

Die fertige Vorrichtung weist drei Gehäuseräume auf, wobei beispielsweise der dritte Gehäuseraum 6 über den zweiten Druckkanal 11 mit einem Messdruck beaufschlagbar ist, der von unten auf das Sensorelement einwirkt, und der erste Gehäuseraum 4 über den ersten Druckkanal 13 mit einem Referenzdruck beaufschlagbar ist, der von oben auf das Sensorelement einwirkt. In dem zweiten Gehäuseraum 5 können vorteilhaft EMV-Schutzkondensatoren 35 auf dem Träger 3 angeordnet werden, die dort vor schädlichen Substanzen, welche sich beispielsweise in dem ersten Gehäuseraum 4 niederschlagen, geschützt sind.

## Patentansprüche

1. Vorrichtung zur Druckmessung mit einem ein erstes Gehäuseteil (1) und ein zweites Gehäuseteil (2) aufweisenden Gehäuse (9), in dem ein mit einem Sensorelement (31) und mit elektrischen Anschlusselementen (34) versehener Träger (3) angeordnet ist, welches Gehäuse (9) einen das Sensorelement (31) umgebenden und mit einem ersten Druckkanal (13) eines ersten Druckanschlusses (12) verbundenen ersten Gehäuseraum (4), einen gegenüber dem ersten Gehäuseraum (4) abgedichteten, wenigstens die elektrischen Anschlusselemente (34) umgebenden zweiten Gehäuseraum (5) und einen gegenüber dem ersten Gehäuseraum (4) und dem zweiten Gehäuseraum (5) abgedichteten dritten Gehäuseraum (6) aufweist, der mit einem zweiten Druckkanal (11) eines zweiten Druckanschlusses (10) verbunden ist, wobei eine erste Dichtung (15) den dritten Gehäuseraum (6) von dem ersten Gehäuseraum (4) abdichtet und wobei im Auflagebereich vom ersten Gehäuseteil (1) und zweiten Gehäuseteil (2) eine zweite Dichtung (16) angeordnet ist, **dadurch gekennzeichnet, dass** die im Auflagebereich vom ersten Gehäuseteil (1) und zweiten Gehäuseteil (2) angeordnete zweite Dichtung (16) den ersten Gehäuseraum (4) von dem zweiten Gehäuseraum (5) abdichtet.

2. Vorrichtung nach Anspruch 1, **dadurch gekennzeichnet, dass** das zweite Gehäuseteil (2) als Deckel ausgebildet ist.

3. Vorrichtung nach Anspruch 1, **dadurch gekennzeichnet, dass** der dritte Gehäuseraum (6) durch eine von dem Sensorelement (31) abgewandte Seite des Trägers (3) und die Innenwand (18) einer an einer dem Träger (3) zugewandten Innenseite (19) des ersten Gehäuseteils (1) ausgebildeten und mit dem zweiten Druckkanal (11) in Verbindung stehenden oder diesen bildenden Ausnehmung begrenzt wird.

4. Vorrichtung nach Anspruch 1, **dadurch gekennzeichnet, dass** der erste Druckanschluss (12) und der zweite Druckanschluss (10) an dem ersten Gehäuseteil (1) ausgebildet sind.

5. Vorrichtung nach Anspruch 3, **dadurch gekennzeichnet, dass** zwischen der dem Träger (3) zugewandten Innenseite (19) des ersten Gehäuseteils (1) und der von dem Sensorelement (31) abgewandten Seite des Trägers (3) die erste Dichtung (15) angeordnet ist.

6. Vorrichtung nach Anspruch 1, **dadurch gekennzeichnet, dass** die zweite Dichtung (16) einen umlaufenden Dichtungsabschnitt (16a) im Auflagebereich vom ersten Gehäuseteil (1) und zweiten Gehäuseteil (2) und einen den umlaufenden Dichtungsabschnitt (16a) brückenartig übergreifenden inneren Dichtungsabschnitt (16b) aufweist, welcher innere Dichtungsabschnitt (16b) den Übergangsbereich zwischen dem Träger (3) und einer an dem zweiten Gehäuseteil (2) ausgebildeten, den ersten Gehäuseraum (4) von dem zweiten Gehäuseraum (5) trennenden Trennwand (22) abdichtet.

7. Vorrichtung nach einem der Ansprüche 5 oder 6, **dadurch gekennzeichnet, dass** die erste Dichtung (15) und/oder die zweite Dichtung (16) durch jeweils eine Dichtklebung und insbesondere durch jeweils eine Klebstoffraupe gebildet werden.

8. Vorrichtung nach Anspruch 7, **dadurch gekennzeichnet, dass** die erste Dichtklebung (15) und/oder die zweite Dichtklebung (16) im wesentlichen in jeweils einer Ebene angeordnet sind.

9. Vorrichtung nach Anspruch 1, **dadurch gekennzeichnet, dass** der erste Druckanschluss (12) und der zweite Druckanschluss (10) von einer gemeinsamen Seite des ersten Gehäuseteils (1) abstehen.

10. Vorrichtung nach Anspruch 1, **dadurch gekennzeichnet, dass** der erste Druckanschluss (12) im rechten Winkel zu einem zweiten Druckanschluss (10) von dem ersten Gehäuseteil (1) absteht.

11. Vorrichtung nach einem der vorstehenden Ansprüche, **dadurch gekennzeichnet, dass** EMV-Schutzkondensatoren (35) innerhalb des zweiten Gehäuseraums (5) auf dem Träger (3) angeordnet sind.

12. Vorrichtung nach einem der vorstehenden Ansprüche, **dadurch gekennzeichnet, dass** die Vorrichtung als Differenzdrucksensor ausgebildet ist.

## Claims

1. Pressure measuring device, with a housing (9), which comprises a first housing part (1) and a second housing part (2) and in which a carrier (3) provided with a sensor element (31) and with electrical connecting elements (34) is arranged, which housing (9) comprises a first housing chamber (4), which surrounds the sensor element (31) and is connected to a first pressure channel (13) of a first pressure connection (12), a second housing chamber (5), which is sealed in relation to the first housing chamber (4) and surrounds at least the electrical connecting elements (34), and a third housing chamber (6), which is sealed in relation to the first housing chamber (4) and the second housing chamber (5) and is connected to a second pressure channel (11) of a second pressure connection (10), a first seal (15) sealing the third housing chamber (6) from the first housing chamber (4) and a second seal (16) being arranged in the supporting region of the first housing part (1) and the second housing part (2), **characterized in that** the second seal (16), arranged in the supporting region of the first housing part (1) and the second housing part (2), seals the first housing chamber (4) from the second housing chamber (5).

2. Device according to Claim 1, **characterized in that** the second housing part (2) is formed as a cover.

3. Device according to Claim 1, **characterized in that** the third housing chamber (6) is delimited by a side of the carrier (3) that is facing away from the sensor element (31) and the inner wall (18) of a recess which is formed on an inner side (19) of the first housing part (1) that is facing the carrier (3) and is in connection with or forms the second pressure channel (11).

4. Device according to Claim 1, **characterized in that** the first pressure connection (12) and the second pressure connection (10) are formed on the first housing part (1).

5. Device according to Claim 3, **characterized in that** the first seal (15) is arranged between the inner side (19) of the first housing part (1) that is facing the carrier (3) and the side of the carrier (3) that is facing away from the sensor element (31).

6. Device according to Claim 1, **characterized in that** the second seal (16) comprises a peripheral seal portion (16a) in the supporting region of the first housing part (1) and the second housing part (2) and an inner seal portion (16b) reaching over the peripheral seal portion (16a) in the manner of a bridge, which inner seal portion (16b) seals the transitional region between the carrier (3) and a separating wall (22), which is formed on the second housing part (2) and separates the first housing chamber (4) from the second housing chamber (5).

7. Device according to either of Claims 5 and 6, **characterized in that** the first seal (15) and/or the second seal (16) are each formed by a sealing adhesive bond and, in particular, each formed by a bead of adhesive.

8. Device according to Claim 7, **characterized in that** the first sealing adhesive bond (15) and/or the second sealing adhesive bond (16) are each substantially arranged in one plane.

9. Device according to Claim 1, **characterized in that** the first pressure connection (12) and the second pressure connection (10) protrude from a common side of the first housing part (1).

10. Device according to Claim 1, **characterized in that** the first pressure connection (12) protrudes from the first housing part (1) at right angles to a second pressure connection (10).

11. Device according to one of the preceding claims, **characterized in that** EMC protective capacitors (35) within the second housing chamber (5) are arranged on the carrier (3).

12. Device according to one of the preceding claims, **characterized in that** the device is formed as a differential pressure sensor.

## Revendications

1. Dispositif de mesure de pression comprenant un boîtier (9) présentant une première partie de boîtier (1) et une deuxième partie de boîtier (2), dans lequel est disposé un support (3) pourvu d'un élément de capteur (31) et d'éléments de raccordement électriques (34), lequel boîtier (9) présente un premier espace de boîtier (4) entourant l'élément de capteur (31) et connecté à un premier canal de pression (13) d'un premier raccord de pression (12), un deuxième espace de boîtier (5) étanche par rapport au premier espace de boîtier (4), entourant au moins les éléments de raccordement électriques (34), et un troisième espace de boîtier (6) étanche par rapport au premier espace de boîtier (4) et au deuxième espace de boîtier (5), qui est connecté à un deuxième canal de pression (11) d'un deuxième raccord de pression (10), un premier joint d'étanchéité (15) séparant hermétiquement le troisième espace de boîtier (6) du premier espace de boîtier (4), et un deuxième joint d'étanchéité (16) étant disposé dans la région d'appui de la première partie de boîtier (1) et de la deuxième partie de boîtier (2), **caractérisé en ce que** le deuxième joint d'étanchéité (16) disposé dans la région d'appui de la première partie de boîtier (1) et de la deuxième partie de boitier (2) sépare hermétiquement le premier espace de boîtier (4) du deuxième espace de boîtier (5).

2. Dispositif selon la revendication 1, **caractérisé en ce que** la deuxième partie de boîtier (2) est réalisée sous forme de couvercle.

3. Dispositif selon la revendication 1, **caractérisé en ce que** le troisième espace de boîtier (6) est limité par un côté du support (3) opposé à l'élément de capteur (31) et par la paroi interne (18) d'un évidement réalisé sur un côté interne (19), tourné vers le support (3), de la première partie de boîtier (1) et en liaison avec le deuxième canal de pression (11) ou formant ce dernier.

4. Dispositif selon la revendication 1, **caractérisé en ce que** le premier raccord de pression (12) et le deuxième raccord de pression (10) sont réalisés sur la première partie de boîtier (1).

5. Dispositif selon la revendication 3, **caractérisé en ce que** le premier joint d'étanchéité (15) est disposé entre le côté interne (19) de la première partie de boîtier (1) tourné vers le support (3) et le côté du support (3) tourné à l'opposé de l'élément de capteur (31).

6. Dispositif selon la revendication 1, **caractérisé en ce que** le deuxième joint d'étanchéité (16) présente une portion d'étanchéité périphérique (16a) dans la région d'appui de la première partie de boîtier (1) et de la deuxième partie de boîtier (2) et une portion d'étanchéité (16b) interne venant en prise par le dessus à la manière d'un pont avec la portion d'étanchéité périphérique (16a), laquelle portion d'étanchéité interne (16b) rend étanche la région de transition entre le support (3) et une paroi de séparation (22) réalisée sur la deuxième partie de boîtier (2) et séparant le premier espace de boîtier (4) du deuxième espace de boîtier (5).

7. Dispositif selon l'une quelconque des revendications 5 ou 6, **caractérisé en ce que** le premier joint d'étanchéité (15) et/ou le deuxième joint d'étanchéité (16) sont formés à chaque fois par un collage d'étanchéité et notamment à chaque fois par un cordon de colle.

8. Dispositif selon la revendication 7, **caractérisé en ce que** le premier collage d'étanchéité (15) et/ou le deuxième collage d'étanchéité (16) sont disposés essentiellement à chaque fois dans un plan.

9. Dispositif selon la revendication 1, **caractérisé en ce que** le premier raccord de pression (12) et le deuxième raccord de pression (10) dépassent d'un côté commun de la première partie de boîtier (1).

10. Dispositif selon la revendication 1, **caractérisé en ce que** le premier raccord de pression (12) fait saillie de la première partie de boîtier (1) à angle droit par rapport à un deuxième raccord de pression (10).

11. Dispositif selon l'une quelconque des revendications précédentes, **caractérisé en ce que** des condensateurs antiparasites (35) sont disposés sur le support (3) à l'intérieur du deuxième espace de boîtier (5).

12. Dispositif selon l'une quelconque des revendications précédentes, **caractérisé en ce que** le dispositif est réalisé sous forme de capteur de pression différentiel.
